# EUROPÄISCHE PATENTSCHRIFT

(11) **EP 4 127 269 B1**
(45) Veröffentlichungstag und Bekanntmachung des Hinweises auf die Patenterteilung: **13.12.2023**
(21) Anmeldenummer: 21705472.5
(22) Anmeldetag: 11.02.2021
(51) Int. Cl.: C25B 1/04, C25B 1/27, C25B 9/23, C25B 9/70, C25B 11/091, C25B 15/08

(54) **VERFAHREN UND VORRICHTUNG ZUR SYNTHESE VON AMMONIAK**
PROCESS AND APPARATUS FOR SYNTHESIS OF AMMONIA
PROCÉDÉ ET DISPOSITIF DE SYNTHÈSE D'AMMONIAC

(30) Priorität: 01.04.2020 DE 102020109016
(43) Veröffentlichungstag der Anmeldung: 08.02.2023
(73) Patentinhaber: Forschungszentrum Jülich GmbH, 52425 Jülich (DE)
(72) Erfinder: MÜLLER, Martin, 53489 Sinzig (DE)
(74) Vertreter: Paul & Albrecht Patentanwälte PartG mbB
(86) Internationale Anmeldenummer: PCT/EP2021/053371
(87) Internationale Veröffentlichungsnummer: WO 2021/197699

(56) Entgegenhaltungen:
- WO-A1-2019/072608
- DE-B- 1 220 401
- US-A1- 2019 382 903
- Kugler Kurt: "Electrochemical Nitrogen Reduction for Ammonia Synthesis Elektrochemische Stickstoffreduktion für die Ammoniaksynthese", Dissertation zur Erlangung des akademischen Grades eines Doktors der Ingenieurwissenschaften, 2. November 2015 (2015-11-02), Seiten 1-187, XP055796538, Gefunden im Internet: URL:http://publications.rwth-aachen.de/rec ord/572765/files/572765.pdf [gefunden am 2021-04-20]
- GOMEZ JAMIE R ET AL: "Techno-economic analysis and life cycle assessment for electrochemical ammonia production using proton conducting membrane", INTERNATIONAL JOURNAL OF HYDROGEN ENERGY, ELSEVIER SCIENCE PUBLISHERS B.V., BARKING, GB, Bd. 45, Nr. 1, 21. November 2019 (2019-11-21), Seiten 721-737, XP085968715, ISSN: 0360-3199, DOI: 10.1016/J.IJHYDENE.2019.10.174
- V. KORDALI ET AL: "Electrochemical synthesis of ammonia at atmospheric pressure and low temperature in a solid polymer electrolyte cell", CHEMICAL COMMUNICATIONS, Nr. 17, 1. Januar 2000 (2000-01-01), Seiten 1673-1674, XP055461238, ISSN: 1359-7345, DOI: 10.1039/b004885m
- YUKO FUJITA ET AL: "AN ELECTROCHEMICAL OXYGEN SEPARATOR USING AN ION-EXCHANGE MEMBRANE AS THE ELECTROLYTE", JOURNAL OF APPLIED ELECTROCHEMISTRY, SPRINGER, DORDRECHT, NL, Bd. 16, Nr. 6, 1. November 1986 (1986-11-01), Seiten 935-940, XP000567790, ISSN: 0021-891X, DOI: 10.1007/BF01006541

## Beschreibung

Die Erfindung betrifft ein Verfahren zur Synthese von Ammoniak, bei dem eine elektrochemische Hauptzelle, die eine anodische Halbzelle mit einer Anode und eine kathodische Halbzelle mit einer Kathode umfasst, wobei zwischen der anodischen und der kathodischen Halbzelle eine Membran angeordnet ist, durch welche Protonen aus der anodischen in die kathodische Halbzelle der Hauptzelle gelangen können, und wobei die Anode wenigstens ein Katalysatormaterial, insbesondere Iridium und/oder Ruthenium und/oder Platin, umfasst und die Kathode wenigstens ein Katalysatormaterial, insbesondere Ruthenium und/oder Titan und/oder Eisen, bevorzugt Ruthenium und Titan und Eisen, umfasst, bereitgestellt wird.

Darüber hinaus betrifft die Erfindung Vorrichtung zur Synthese von Ammoniak, umfassend eine elektrochemische Hauptzelle, die eine anodische Halbzelle mit einer Anode und eine kathodische Halbzelle mit einer Kathode umfasst, wobei zwischen der anodischen und der kathodischen Halbzelle eine Membran angeordnet ist, durch welche Protonen aus der anodischen in die kathodische Halbzelle gelangen können, und wobei die Anode wenigstens ein Katalysatormaterial, insbesondere Iridium und/oder Ruthenium und/oder Platin, umfasst und die Kathode wenigstens ein Katalysatormaterial, insbesondere Ruthenium und/oder Titan und/oder Eisen, bevorzugt Ruthenium und Titan und Eisen, umfasst, und Mittel zur Bereitstellung einer Spannung zwischen der Anode und der Kathode.

Ammoniak (NH₃) stellt eine sehr wichtige Chemikalie dar, die u.a. als Düngemittel Verwendung findet. Für die Herstellung von Ammoniak ist das Haber-Bosch-Verfahren bekannt, bei dem es sich um ein großindustrielles chemisches Verfahren handelt. Bei diesem nach Fritz Haber und Carl Bosch benannten Verfahren erfolgt die Synthese von Ammoniak aus atmosphärischem Stickstoff und Wasserstoff an einem eisenhaltigen Katalysator bei hohen Drücken und hohen Temperaturen. Der Druck kann insbesondere im Bereich von 150 bis 350 bar und die Temperatur insbesondere im Bereich von 400 bis 500°C liegen. Fast die gesamte jährliche Ammoniakproduktion erfolgt derzeit mittels des Haber-Bosch-Verfahrens.

Es wird teilweise als nachteilig erachtet, dass die Ammoniakerzeugung über dieses Verfahren nur großtechnisch möglich ist und sich durch einen vergleichsweise hohen Energieverbrauch und Ausstoß von CO₂ auszeichnet.

Die US 2019/0382903 A1 offenbart ein Verfahren zur Präparation von Ammoniak mittels einer Elektrolysezelle. Das Verfahren umfasst, dass der Zelle für die Elektrolyse Stickstoff als erster Reaktant und Wasser oder Wasserdampf als zweiter Reaktant zugeführt wird.

Der Aufsatz "Techno-economic analysis and life cycle assessment for electro-chemical ammonia production using proton conducting membrane", Gomez Jamie R et al., International journal of hydrogen energy Elsevier science publishers B.V., Bd. 45, Nr. 1, 21. November 2019, Seiten 721-737, beschäftigt sich mit der elektrochemischen Ammoniak-Produktion unter Verwendung protonenleitender Membranen. Es ist unter anderem beschrieben, dass die elektrochemische Synthese unter Verwendung von Elektrolyse für Wasserstoff und kryogenischen Stickstoff als gangbarer Weg zum Erhalt von "grünem Ammoniak" möglich ist.

Der Aufsatz "Electrochemical synthesis of ammonia at atmospheric pressure and low temperature in a solid polymer electrolyte cell", V. Kordali et at, Chemical communications, Nr. 17, 1. Januar 2000, Seiten 1673-1674 , offen-bart die heterogene elektrokatalytische Synthese von Ammoniak aus Stickstoff und Wasser an Ru-Kathoden unter Verwendung einer Festkörper-Polymer-Elektrolysezelle bei Atmosphärendruck und niedrigen Temperaturen.

Die Publikation "An electrochemical oxygen separator using an ion-exchange membrane as the electrolyte", Yuko Fujita et al, Springer, Dordrecht, Bd. 16, Nr. 6, 1. November 1986, Seiten 935-940, offenbart die Entwicklung eines elektrochemischen Wasserstoff-Separators, der auf einer Sauerstoffreduktion an einer Luftkathode und Sauerstoffentwicklung an einer Anode basiert. Die Anode und Kathode umfassen Platin.

Die DE 12 20 401 B offenbart ein Verfahren zur Erzeugung von Synthesegas für die Ammoniaksynthese. Dieses zeichnet sich dadurch aus, dass in einer Wasserelektrolyse mit Katalysatorelektroden die Kathode zusätzlich mit Luft gespült wird.

In der Dissertation "Electrochemical Nitrogen Reduction for Ammonia Synthesis" von Kurt Kugler, Fakultät für Maschinenwesen der Rheinisch-Westfälischen Hochschule Aachen, HBZ: HT018996649, die im Jahre 2016 auf Publikationsserver der RWTH Aachen veröffentlicht wurde, wird vorgeschlagen, eine elektrochemische Ammoniaksynthese in einer elektrochemischen Zelle durchzuführen. Diese umfasst zwei Hälften, nämlich eine anodische und eine kathodische Halbzelle, die über eine Membran, konkret eine Kationenaustauschmembran, voneinander getrennt sind. In der Dissertation wird die eine Membran umfassende elektrochemische Zelle als elektrochemischer Membranreaktor bezeichnet.

Die anodische Halbzelle umfasst eine Anode und die kathodische Halbzelle umfasst eine Kathode. Sowohl die Anode als auch die Kathode liegen in Form einer Elektrodenstruktur vor, die jeweils wenigstens ein Katalysatormaterial umfasst. Die Anode und die Kathode stehen mit gegenüberliegenden Seiten der Membran in Kontakt. Konkret sind sie auf gegenüberliegende Seiten der Membran aufgepresst.

Als Katalysatormaterial für die Anode für die Wasseroxidation ist in der Dissertation Iridium (Ir) vorgeschlagen, konkret ein Iridium Misch-Metall-Oxid (IrMMO) Katalysator. Für die Ammoniaksynthese benötigte H⁺ können so umweltfreundlich durch Wasseroxidation an der Anode hergestellt werden und durch die Membran zur Kathode gelangen. Es wurden ferner Titan (Ti), Eisen (Fe) und Ruthenium (Ru) als potentielle Katalysatormaterialien ausgewählt.

Für die Ammoniaksynthese wird eine Spannung zwischen der Anode und der Kathode angelegt und der Anode Wasserdampf (H₂O) und der Kathode Stickstoff (N₂) zugeführt, der durch kryogenische Luftseparation erhalten wurde. An der Anode wird Sauerstoff (O₂) und an der Kathode Ammoniak (NH₃) erhalten. Es ist vorgeschlagen, für die Spannungsversorgung der elektrochemischen Zelle erneuerbare Energie, etwa Sonnen- oder Windenergie, zu nutzen, so dass der Prozess besonders nachhaltig und umweltfreundlich erfolgen kann.

Das in der Dissertation "Electrochemical Nitrogen Reduction for Ammonia Synthesis" vorgeschlagene Verfahren für die Ammmoniaksynthese hat gro-ßes Potential. Es besteht jedoch weiterhin Bedarf daran, die Nachhaltigkeit und Umweltfreundlichkeit der Ammoniakgewinnung zu verbessern.

Es ist daher eine Aufgabe der vorliegenden Erfindung, ein Verfahren für die Ammoniaksynthese der eingangs genannten Art derart weiterzuentwickeln, dass es sich durch eine besonders hohe Nachhaltigkeit und Umweltfreundlichkeit auszeichnet und sich gleichzeitig mit vertretbarem Aufwand durchführen lässt. Darüber hinaus ist es eine Aufgabe der Erfindung, eine Vorrichtung zur Durchführung eines solchen Verfahrens anzugeben.

Die erstgenannte Aufgabe wird bei einem Verfahren der eingangs genannten Art gelöst durch die kennzeichnenden Merkmale von Anspruch 1.

Die zweitgenannte Aufgabe wird bei einer Vorrichtung der eingangs genannten Art gelöst durch die kennzeichnenden Merkmale von Anspruch 10.

Die erfindungsgemäße Vorrichtung hat sich als besonders geeignet für die Durchführung des erfindungsgemäßen Verfahrens erwiesen.

Der Erfindung liegt mit anderen Worten die Idee zugrunde, den Stickstoff, der für die Ammoniaksynthese in einer elektrochemischen Zelle der kathodischen Halbzelle zuzuführen ist, mittels einer weiteren elektrochemischen Zelle bereitzustellen, der ihrerseits als Eingangs- bzw. Versorgungsstoffe Wasser sowie Stickstoff zusammen mit Sauerstoff, insbesondere in Form von Luft, zugeführt werden können. Mittels der Kathode der Vorzelle kann aus einem Gemisch mit Stickstoff und Sauerstoff, insbesondere Luft, Stickstoff und Wasser erhalten werden. Man kann auch sagen, dass die Vorzelle eine Sauerstoffverzehrkathode umfasst. Im Ergebnis wird die Ammoniaksynthese aus Luft und Wasser mittels elektrochemischer Zellen möglich.

Auf einen aufwendigen separaten Prozess für die Stickstoffgewinnung aus Luft, insbesondere auf eine kryogenische Luftseparation, kann im Ergebnis verzichtet werden. Mit dem Gesamtprozess ist dabei ein vergleichsweise geringer Konstruktions- und Energieaufwand verbunden. Mit der erfindungsgemäßen Vorgehensweise wird, insbesondere bei Kopplung mit erneuerbaren Energiequellen, eine besonders umweltfreundliche, nachhaltige Ammoniakgewinnung ermöglicht.

Stickstoff und Wasser bzw. Wasserdampf sind sehr einfach voneinander separierbar. Beispielsweise kann von dem aus der kathodischen Halbzelle der Vorzelle austretenden Stickstoff und Wasser das Wasser abgeschieden werden, insbesondere mittels einer zwischen der Vor- und der Hauptzelle vorgesehenen Kühl- und/oder Abscheideeinrichtung. Die erfindungsgemäße Vorrichtung umfasst entsprechend in vorteilhafter Weiterbildung eine der kathodischen Halbzelle der Hauptzelle vorgeschaltete Kühl- und/oder Abscheideeinrichtung, so dass insbesondere flüssiges Wasser abgeschieden werden kann, bevor es die kathodische Halbzelle der Hauptzelle erreicht.

Der anodischen Halbzelle der Hauptzelle wird Wasser bevorzugt im Überschuss zugeführt. Insbesondere in diesem Falle wird Wasser auch wieder aus der anodischen Halbzelle der Hauptzelle austreten, so dass diese Wasser und Sauerstoff verlassen.

Die Stoffzufuhrerfolgt in die jeweilige anodische und kathodische Halbzelle einer Zelle erfolgt zweckmäßiger Weise gleichzeitig. Das bedeutet, zweckmäßiger Weise wird der anodischen Halbzelle der Vorzelle Wasser und gleichzeitig der kathodischen Halbzelle der Vorzelle Stickstoff und Sauerstoff, insbesondere in Form von Luft, zugeführt. In analoger Weise wird zweckmä-ßiger Weise, wenn der anodischen Halbzelle der Hauptzelle Wasser zugeführt wird, gleichzeitig der kathodischen Halbzelle dieser Stickstoff zugeführt.

Die Halbzellen der Vor- und Hauptzelle definieren zweckmäßiger Weise in ihrem Inneren jeweils einen elektrisch kontaktierten Reaktionsraum. Sie sind ferner zweckmäßiger Weise derart ausgestaltet, dass diesen die zuzuführenden Ausgangselemente bzw. - stoffe, insbesondere in gasförmigem und/oder flüssigem Zustand, zugeführt werden können, wofür sie bevorzugt jeweils wenigstens einen Einlass aufweisen, und derart, dass die darin erhaltenen Reaktionsprodukte aus diesen austreten können, wofür sie bevorzugt jeweils wenigstens einen Auslass aufweisen.

Die Kathode und Anode der Halbzellen der Vor- und Hauptzelle sind bevorzugt jeweils durch eine poröse, elektrisch und ionisch leitfähige und katalytisch aktive Elektrodenstruktur gegeben oder umfassen eine solche. Die Anode und die Kathode der jeweiligen Zelle stehen zweckmäßiger Weise mit gegenüberliegenden Seiten der Membran in Kontakt. Sie sind bevorzugt auf gegenüberliegende Seiten der jeweiligen Membran aufgepresst. Insbesondere im Bereich der Kontaktstellen laufen die elektrochemischen Reaktionen ab.

In vorteilhafter Ausgestaltung umfasst die Anode und Kathode der Vor- und/oder Hauptzelle jeweils auch etwas von dem ionenleitenden Material der Membran der jeweiligen Zelle. Dadurch ist es möglich, die Reaktionszone zu vergrößern und die Leistungsfähigkeit der Zellen zu steigern.

Die Anode und Kathode der Vor- und Hauptzelle weisen jeweils wenigstens ein Katalysatormaterial auf, welches die erforderlichen Reaktionen ermöglicht. Es ist auch möglich, dass eine Mischung bzw. Gruppe von mehreren Katalysatormaterialien vorliegt, insbesondere an der Kathode der Hauptzelle.

Als besonders geeignetes Katalysatormaterial für die Vorzelle haben sich anodenseitig Iridium und kathodenseitig Platin erwiesen. In bevorzugter Ausgestaltung weist die Anode der Vorzelle Iridium als einziges Katalysatormaterial auf und weist die Kathode der Vorzelle Platin als bevorzugtes Katalysatormaterial auf.

Was die Hauptzelle angeht, hat sich für die Anode ebenfalls Iridium als Katalysatormaterial bewährt. Auch hier gilt in einer vorteilhaften Ausgestaltung, dass die Anode Iridium als einziges Katalysatormaterial umfasst.

Auch ist es möglich, dass die Anode der Hauptzelle Platin als bevorzugt einziges Katalysatormaterial aufweist. Dies insbesondere in demjenigen Falle, dass noch wenigstens eine elektrochemische Zwischenzelle vorgesehen ist, worauf weiter unten eingegangen wird.

Was die Kathode der Hauptzelle angeht, hat sich als ganz besonderes geeignet erwiesen, wenn eine Kombination mehrerer Katalysatormaterialien vorliegt. Besonders bevorzugt weist die Kathode der Hauptzelle Ruthenium und Titan und Eisen als Katalysatormaterialien auf.

Die sowohl in der Vor- als auch der Hauptzelle vorhandene Membran ist bevorzugt als Kationenaustauschermembran ausgestaltet. Es handelt sich insbesondere um eine protonenleitende Membran. Die Membran ermöglicht, dass erforderliche Protonen von der Anode der anodischen Halbzelle zu der Kathode der kathodischen Halbzelle gelangen können. Die Membran der Vorzelle und/oder die Membran der Hauptzelle kann beispielsweise Nafion umfassen oder daraus bestehen.

Erfindungsgemäß ist vorgesehen, dass die Anode der Hauptzelle als Katalysatormaterial bevorzugt Platin umfasst, und dass eine der Vorzelle nachgeschaltete und der Hauptzelle vorgeschaltete Zwischenzelle, die eine anodische Halbzelle mit einer Anode und eine kathodische Halbzelle mit einer Kathode umfasst, wobei zwischen der anodischen und der kathodischen Halbzelle eine Membran angeordnet ist, durch welche Protonen aus der anodischen in die kathodische Halbzelle gelangen können, und wobei die Anode wenigstens ein Katalysatormaterial, insbesondere Iridium und/oder Ruthenium, umfasst und die Kathode wenigstens ein Katalysatormaterial, insbesondere Platin, umfasst, bereitgestellt wird, und zwischen der Anode und Kathode der Zwischenzelle eine Spannung, Zwischenzellenspannung, angelegt wird, und der anodischen Halbzelle der Zwischenzelle Wasser zugeführt wird, welches der anodischen Halbzelle der Vorzelle entnommen wurde, und bevorzugt der kathodischen Halbzelle der Zwischenzelle keine Stoffe zugeführt werden, und in der anodischen Halbzelle der Zwischenzelle Sauerstoff erhalten wird, und in der kathodischen Halbzelle der Zwischenzelle Wasserstoff und permeierendes Waser erhalten werden, und der anodischen Halbzelle der Hauptzelle Wasserstoff und Wasser, die in der kathodischen Halbzelle der Zwischenzelle erhalten wurden, zugeführt werden, wobei das Wasser insbesondere in verdampftem Zustand zugeführt wird.

Die erfindungsgemäße Vorrichtung zeichnet sich entsprechend dadurch aus, dass die Anode der Hauptzelle als Katalysatormaterial bevorzugt Platin umfasst, und die Vorrichtung weiterhin aufweist
- eine der Vorzelle nachgeschaltete und der Hauptzelle vorgeschaltete Zwischenzelle, die eine anodische Halbzelle mit einer Anode und eine kathodische Halbzelle mit einer Kathode umfasst, wobei zwischen der anodischen und der kathodischen Halbzelle eine Membran angeordnet ist, durch welche Protonen aus der anodischen in die kathodische Halbzelle gelangen können, und wobei die Anode wenigstens ein Katalysatormaterial, insbesondere Iridium und/oder Ruthenium, umfasst und die Kathode wenigstens ein Katalysatormaterial, insbesondere Platin, und
- Zwischenzellenspannungsmittel zur Bereitstellung einer Spannung zwischen der Anode und Kathode der Zwischenzelle,
- Fluidverbindungsmittel zur fluidtechnischen Verbindung der anodischen Halbzelle der Vorzelle mit der anodischen Halbzelle der Zwischenzelle,
- Fluidverbindungsmittel zur fluidtechnischen Verbindung der kathodischen Halbzelle der Zwischenzelle mit der anodischen Halbzelle der Hauptzelle.

Es kommen drei hintereinander geschaltete elektrochemische Zellen zum Einsatz, wobei die Zwischenzelle der Speisung der anodischen Halbzelle der Hauptzelle mit Wasserstoff und Wasser dient, während die kathodische Halbzelle der Hauptzelle, wie in der Konstellation ohne Zwischenzelle, aus der kathodischen Halbzelle der Vorzelle mit Stickstoff gespeist wird. Der Vorteil liegt darin, dass die Hauptzelle dann bei niedrigeren Spannungen und auch bei niedrigeren Temperaturen betrieben werden kann, was die Ammoniakausbeute steigert.

Bezüglich der Zwischenzelle gilt, dass sich deren Anode und/oder deren Kathode und/oder deren Membran in Weiterbildung durch eines oder mehrere der Merkmale auszeichnen kann, die vorstehend im Zusammenhang mit der Vor- und Hauptzelle als bevorzugt für diese Komponenten beschrieben wurden.

Für die Zwischenzelle hat sich dabei als ganz besonders geeignet erwiesen, wenn die Anode Iridium als bevorzugt einziges Katalysatormaterial umfasst, und die Kathode Platin als bevorzugt einziges Katalysatormaterial.

Bevorzugt wird zwischen der Anode und Kathode der Zwischenzelle eine Zwischenzellenspannung im Bereich von 1,2 bis 2,5 Volt, bevorzugt im Bereich von 1,48 bis 2 Volt angelegt. Bei der erfindungsgemäßen Vorrichtung sind entsprechend die Zwischenzellenspannungsmittel bevorzugt dazu ausgebildet, eine Spannung im Bereich von 1,2 bis 2,5 Volt, bevorzugt im Bereich von 1,48 bis 2 Volt bereitzustellen.

Die Betriebstemperatur in der Zwischenzelle liegt bevorzugt im Bereich von 10°C bis 90°C. Sie stellt sich in der Regel je nach Wahl der Betriebsparameter ein. Eine etwaig vorhandene Zwischenzelle der erfindungsgemäßen Vorrichtung ist zweckmäßiger Weise für entsprechende Betriebstemperaturen ausgestaltet.

In weiterer vorteilhafter Ausgestaltung wird für die Bereitstellung der Zwischenzellenspannung Solarenergie genutzt. Die Zwischenzellenspannung wird bevorzugt mittels wenigstens einer Photovoltaikzelle bereitgestellt. Bei der Vorrichtung können dann die Zwischenzellenspannungsmittel wenigstens eine Photovoltaikzelle umfassen oder durch wenigstens eine Photovoltaikzelle gegeben sein.

Was die Vorzellenspannung angeht, kann ferner vorgesehen sein, dass ein solche von weniger als 1,7 Volt, bevorzugt von weniger als 1,48 Volt, besonders bevorzugt von weniger als 1,23 Volt angelegt wird.

Alternativ oder zusätzlich kann eine Hauptzellenspannung im Bereich von 1 Volt bis 3 Volt, bevorzugt im Bereich von 1,7 Volt bis 2,7 Volt, besonders bevorzugt 1,2 Volt bis 1,3 Volt angelegt werden.

Entsprechend können die Vorzellenspannungsmittel der erfindungsgemäßen Vorrichtung dazu ausgebildet sind, eine Spannung von weniger als 1,7 Volt, bevorzugt von weniger als 1,48 Volt, besonders bevorzugt von weniger als 1,23 Volt bereitzustellen, und/oder können die Hauptzellenspannungsmittel der erfindungsgemäßen Vorrichtung dazu ausgebildet sind, eine Spannung im Bereich von 1 bis 3 Volt, bevorzugt im Bereich von 1,7 bis 2,7 Volt, besonders bevorzugt 1,2 bis 1,3 Volt bereitzustellen.

Die Betriebstemperatur in der Vorzelle liegt bevorzugt im Bereich von 10°C bis 90°C. Sie stellt sich in der Regel je nach Wahl der Betriebsparameter ein. Die Vorzelle der erfindungsgemäßen Vorrichtung ist zweckmäßiger Weise für entsprechende Betriebstemperaturen ausgestaltet.

Die Betriebstemperatur in der Hauptzelle liegt bevorzugt im Bereich von 20°C bis 40°C, insbesondere im Bereich von 25°C bis 35°C. Sie stellt sich in der Regel je nach Wahl der Betriebsparameter ein. Die Hauptzelle der erfindungsgemäßen Vorrichtung ist zweckmäßiger Weise für entsprechende Betriebstemperaturen ausgestaltet.

Auch für die Bereitstellung der Vorzellenspannung und/oder für die Bereitstellung der Hauptzellenspannung kann in vorteilhafter Ausgestaltung Solarenergie genutzt werden. Auch hier kann gelten, dass die Vorzellenspannung und/oder die Hauptzellenspannung mittels wenigstens einer Photovoltaikzelle bereitgestellt wird. Als besonders geeignet hat sich erwiesen, wenn von einer der Vorzelle zugeordneten Photovoltaikzelle die Vorzellenspannung bereitgestellt wird und von einer weiteren, der Hauptzelle zugeordneten Photovoltaikzelle die Hauptzellenspannung bereitgestellt wird. Ist eine Zwischenzelle vorhanden, ist dieser bevorzugter Weise ebenfalls eine eigene, dritte Photovoltaikzelle zugeordnet, welche dann die Zwischenzellenspannung bereitstellt.

Die Vorzellenspannungsmittel der erfindungsgemäßen Vorrichtung können entsprechend wenigstens eine Photovoltaikzelle umfassen oder durch wenigstens eine Photovoltaikzelle gegeben sein, und die Hauptzellenspannungsmittel wenigstens eine Photovoltaikzelle umfassen oder durch wenigstens eine Photovoltaikzelle gegeben sein.

Als ganz besonders vorteilhaft hat sich erwiesen, wenn alle elektrochemischen Zellen, also sowohl die Vorzelle als auch die Hauptzelle als auch die Zwischenzelle, mittels einer Photovoltaikzelle mit Spannung versorgt werden. Dann ist bevorzugt für jede elektrochemische Zelle eine eigene Photovoltaikzelle vorgesehen. Diese Ausgestaltung ermöglicht es, dass die gesamte Spannungsversorgung des auf die erfindungsgemäße Weise ablaufende Prozesses zur Ammoniaksynthese allein durch Sonnenenergie gedeckt wird, was ein besonders hohes Maß an Nachhaltigkeit ermöglicht. Dann ist mit andern Worten eine solare Erzeugung von Ammoniak aus Luft und Wasser möglich.

Es sei angemerkt, dass es natürlich möglich ist, dass eine erfindungsgemäße Vorrichtung auch noch mehr als drei elektrochemische Zelle umfasst bzw. bei Durchführung des erfindungsgemäßen Verfahrens mehr als drei elektrochemische Zellen genutzt werden. Beispielsweise können jeweils zwei oder mehr identische Zellen zum Einsatz kommen, um einen höheren Durchsatz zu ermöglichen. Dies kann sowohl für den Fall gelten, dass keine Zwischenzellen vorgesehen ist, als auch für den Fall mit einer Zwischenzelle. Es kann sein, dass beide oder alle drei Zellenarten zwei- oder mehrfach vorhanden sind oder beispielsweise auch nur eine der Zellen

Eine weitere Ausführungsform des erfindungsgemäßen Verfahrens zeichnet sich ferner dadurch aus, dass der anodischen Halbzelle der Hauptzelle dampfförmiges Wasser zugeführt wird. Dann wird insbesondere eine der Hauptzelle vorgeschaltete Verdampfungseinrichtung verwendet, um das dampfförmige Wasser zu erhalten. Die Verdampfungseinrichtung kann in besonders vorteilhafter Weiterbildung wenigstens einen solarthermischen Kollektor umfassen oder mit wenigstens einem solarthermischen Kollektor gekoppelt sein. Ein solarthermischer Kollektor ermöglicht es, eine Verdampfung allein mittels Sonnenergie zu erzielen, was das Verfahren bzw. die Vorrichtung besonders nachhaltig und umweltfreundlich macht.

Bei der Vorrichtung kann eine der anodischen Halbzelle der Hauptzelle vorgeschaltete Verdampfungseinrichtung vorgesehen sein. Die Verdampfungseinrichtung kann dann eingangsseitig mit der anodischen Halbzelle der Vorzelle fluidtechnisch verbunden sein. Alternativ oder zusätzlich umfasst die Verdampfungseinrichtung wenigstens einen solarthermischen Kollektor.

Mit dem wenigstens einen solarthermischen Kollektor wird bevorzugt ein Wärmeträgermedium erwärmt und Wärme von diesem auf die Verdampfungseinrichtung durchströmendes Wasser übertragen. Die Verdampfungseinrichtung kann zur konstruktiven Realisierung einen Wärmeträgermediumkreislauf aufweisen.

Wird die Spannungsversorgung für alle elektrochemischen Zellen mittels Photovoltaikzellen realisiert und wir eine ggf. vorgesehene bzw. erforderliche Verdampfung wenigstens ein solarthermischer Kollektor genutzt, kann die komplette Versorgung allein mit Sonnenenergie realisiert werden, was sich als besonders nachhaltig und umweltfreundlich erwiesen hat.

Gemäß einer weiteren vorteilhaften Ausgestaltung des erfindungsgemäßen Verfahrens wird Stickstoff, der in der anodischen Halbzelle der Hauptzelle erhalten wurde, der anodischen Halbzelle der Hauptzelle erneut zugeführt. Die Vorrichtung kann entsprechend wenigstens eine Zirkulationsleitung aufweisen, mittels derer aus der kathodischen Halbzelle der Hauptzelle austretender Stickstoff der kathodischen Halbzelle erneut wieder zugeführt werden kann. Dann kann der Stickstoff mit anderen Worten zirkulieren.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist:
- Figur 1: eine rein schematische Darstellung eines Ausführungsbeispiels einer Vorrichtung, die zwei elektrochemischen Zellen umfasst; und
- Figur 2: eine rein schematische Darstellung eines Ausführungsbeispiels einer erfindungsgemäßen Vorrichtung, die drei elektrochemischen Zellen umfasst.

In den Figuren sind gleiche Komponenten mit gleichen Bezugszeichen versehen.

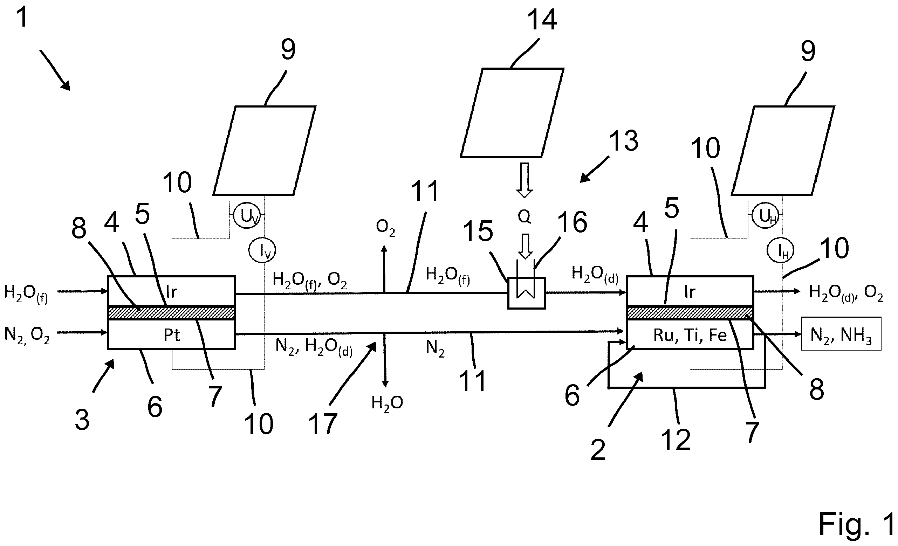

Die Figur 1 zeig in rein schematischer Darstellung ein Ausführungsbeispiel einer Vorrichtung 1 zur Ammoniaksynthese, die eine elektrochemische Hauptzelle 2 und eine dieser vorgeschaltete elektrochemische Vorzelle 3 umfasst.

Die Hauptzelle 2 weist eine anodische Halbzelle 4 mit einer Anode 5 und eine kathodische Halbzelle 6 mit einer Kathode 7 auf. Die beiden Halbzellen 4, 6 definieren in ihrem Inneren jeweils einen Reaktionsraum und weisen jeweils wenigstens einen Einlass und wenigstens einen Auslass auf, die in der rein schematischen Figur nicht zu erkennen sind.

Zwischen der anodischen 4 und der kathodischen Halbzelle 6 der Hauptzelle 2 ist eine Kationenaustauschermembran 8 angeordnet, welche die beiden Halbzellen 4, 6 voneinander trennt und durch welche im Betrieb Protonen aus der anodischen 4 in die kathodische Halbzelle 6 der Hauptzelle 2 gelangen können. Die Anode 5 und Kathode 7 sind jeweils auf gegenüberliegende Seiten der Membran 8 auf diese gepresst. Die Membran 8 ist eine Polymermembran, die vorliegend Nafion umfasst.

Sowohl die Anode 5 als auch die Kathode 7 weisen jeweils wenigstens ein Katalysatormaterial auf. Bei dem gezeigten Ausführungsbeispiel weist die Anode 5 Iridium Ir als Katalysatormaterial auf und die Kathode 7 Ruthenium Ru und Titan Ti und Eisen Fe.

Es sind ferner Hauptzellenspannungsmittel zur Bereitstellung einer Hauptzellenspannung U_{H} zwischen der Anode 5 und der Kathode 7 der Hauptzelle 2 vorgesehen, die vorliegend durch eine Photovoltaikzelle 9 gegeben sind. Die Photovoltaikzelle 9 ist über elektrischen Leitungen 10 mit der Anode 5 und der Kathode 7 verbunden.

Die der elektrochemischen Hauptzelle 2 vorgeschaltete elektrochemische Vorzelle 3 der Vorrichtung 1 ist völlig analog zu der Hauptzelle 2 aufgebaut, umfasst entsprechend ebenfalls eine anodische Halbzelle 4 mit einer Anode 5 und eine kathodische Halbzelle 6 mit einer Kathode 7, und eine zwischen der anodischen und der kathodischen Halbzelle 4, 6 angeordnete Kationenaustauschermembran 8, welche die beiden Halbzellen 4, 6 voneinander trennt. Die beiden Halbzellen 4, 6 der Vorzelle 3 definieren in ihrem Inneren auch jeweils einen Reaktionsraum und weisen jeweils wenigstens einen Einlass und wenigstens einen Auslass auf, die in der rein schematischen Figur nicht zu erkennen sind. Die Membran 8 der Vorzelle 3 umfasst auch Nafion.

Die Anode 5 und die Kathode 7 der Vorzelle 3 weisen jeweils wenigstens ein Katalysatormaterial auf. Das Katalysatormaterial der Anode 4 ist, wiederum analog zur Hauptzelle 2, Iridium. Ein Unterschied zwischen der Haupt- und Vorzelle 2, 3 liegt in den Katalysatormaterial der Kathode 5. Die Kathode 5 der Vorzelle weist nur ein Katalysatormaterial auf, konkret Platin.

Der Vorzelle 3 ist eine weitere Photovoltaikzelle 9 der Vorrichtung 1 zugeordnete, welche Vorzellenspannungsmittel zur Bereitstellung einer Vorzellenspannung Uv zwischen der Anode 5 und Kathode 7 der Vorzelle 3 bildet. Über Leitungen 10 ist die zugehörige elektrische Verbindung gewährleistet.

Die Vorrichtung aus Figur 1 umfasst ferner Fluidverbindungsmittel 11 zur fluidtechnischen Verbindung der anodischen Halbzelle 4 der Vorzelle 3 mit der anodischen Halbzelle 4 der Hauptzelle 2, die bei dem gezeigten Beispiel wenigstens eine Fluidleitung, konkret wenigstens ein Rohr umfassen bzw. dadurch gegeben sind. Es sind auch Fluidverbindungsmittel 11 für die fluidtechnische Verbindung der kathodischen Halbzelle 6 der Vorzelle 3 mit der kathodischen Halbzelle 6 der Hauptzelle 2 vorgesehen, die hier ebenfalls wenigstens eine Fluidleitung, konkret wenigstens ein Rohr umfassen bzw. dadurch gegeben sind.

Der Hauptzelle 2 ist ein Zirkulationsleitung 12 zugeordnet, welche den Auslass deren kathodischer Halbzelle 6 mit dem Einlass deren kathodischer Halbzelle 6 fluidtechnisch verbindet, um eine Zirkulation zu ermöglichen.

Die Vorrichtung 1 umfasst bei dem dargestellten Beispiel auch eine der anodischen Halbzelle 4 der Hauptzelle 2 vorgeschaltete Verdampfungseinrichtung 13, die eingangsseitig mit der anodischen Halbzelle 4 der Vorzelle 3 und ausgangsseitig mit der anodischen Halbzelle 4 der Hauptzelle 2 fluidtechnisch verbunden ist. Die Verdampfungseinrichtung 13 umfasst einen solarthermischen Kollektor 14, eine Wärmetauschereinheit 15 und einen Wärmeträgermediumkreislauf 16. Durch den Kreislauf 16 im Betrieb zirkulierendes Wärmeträgermedium kann mittels des solarthermischen Kollektors 14 erwärmt werden und in der Wärmetauschereinheit 15 Wärme abgeben, um eine durch diese strömende Flüssigkeit zu verdampfen.

Weiterhin ist eine Abscheideeinrichtung 17 vorgesehen, die der kathodischen Halbzelle 4 der Vorzelle 3 nachgeschaltet und der kathodischen Halbzelle 4 der Hauptzelle 2 vorgeschaltet ist. In der rein schematischen 1 Figur ist von dieser nur stark vereinfacht eine von den die beiden kathodischen Halbzellen 6 verbindenden Fluidverbindungsmittel 11 abgehende Leitung für die Ableitung von abgeschiedener Flüssigkeit dargestellt.

Mit der Vorrichtung aus Figur 1 kann ein Ausführungsbeispiel eines Verfahrens durchgeführt werden. Hierzu wird zwischen der Anode 5 und Kathode 7 der Vorzelle 3 eine Vorzellenspannung Uv von weniger als 1,23 V und zwischen der Anode 5 und der Kathode 7 der Hauptzelle 2 eine Hauptzellenspannung U_{H} im Bereiche von 1,7 V bis 2,7 V angelegt. Die Spannungsbereitstellung erfolgt umweltfreundlich und nachhaltig mittels der Photovoltaikzellen 9.

Der anodischen Halbzelle 4 der Vorzelle 3 wird Wasser und gleichzeitig der kathodische Halbzelle 6 der Vorzelle 3 Stickstoff und Sauerstoff in Form von Luft mit Hilfe geeigneter Fördereinrichtungen, wie etwa Pumpen und/oder Gebläsen und/oder Verdichtern, zugeführt. Das Wasser wird bei dem dargestellten Beispiel in flüssiger Form zugeführt. In der Figur ist dies durch ein tiefgestelltes (f) hinter dem H₂O angedeutet. Dass es sich um Wasser in dampfförmigem Zustand handelt ist an entsprechenden Stellen durch H₂O_{(d)} angegeben. In der anodischen Halbzelle 4 der Vorzelle 3 wird Wasser im Überschuss zugeführt und Sauerstoff erhalten und in der kathodischen Halbzelle 6 der Vorzelle 3 werden Stickstoff und Sauerstoff zugeführt und der Sauerstoff mit Protonen und Elektronen zu Wasser reduziert. Die Kathode 7 der Vorzelle 3 dient als Sauerstoffverzehrkathode. Die Betriebstemperatur in der Vorzelle 3 kann insbesondere bis zu 90°C betragen.

Von dem aus der anodischen Halbzelle 4 austretenden flüssigen Wasser und Sauerstoff wird der gasförmige Sauerstoff separiert, was in der Figur 1 durch einen abzweigenden Pfeil angedeutet ist, und das übrig bleibende Wasser wird in der Verdampfungseinrichtung 13 verdampft und in dampfförmigem Zustand der anodischen Halbzelle 4 der Hauptzelle 2 zugeführt. Die Verdampfung erfolgt unter Nutzung des solarthermischen Kollektors 14, also unter Nutzung von Sonnenenergie und somit ebenfalls besonders umweltfreundlich und nachhaltig.

Von dem in der kathodischen Halbzelle 6 der Vorzelle 3 erhaltenen Stickstoff und Wasser wird das flüssige Wasser separiert, was sehr einfach mittels der Abscheideeinrichtung 17 erfolgen kann, und der verbleibende Stickstoff wird der kathodischen Halbzelle 6 der Hauptzelle 2 zugeführt, dient also mit anderen Worten als Input für diese Halbzelle 6. In der anodischen Halbzelle 4 der Hauptzelle 2 wird Wasser eingespeist und in einer elektrochemischen Reaktion in Sauerstoff, Protonen und Elektronen ausgespalten. Wasser wird im Überschuss zugeführt, daher verlassen Wasser und Sauerstoff die Halbzelle 4 und in der kathodischen Halbzelle 6 der Hauptzelle 2 reagiert der im Überschuss zugeführte Stickstoff mit Protonen und Elektronen zu Ammoniak. Die Betriebstemperatur in der Hauptzelle 2 kann insbesondere etwa 30°C betragen, was sich als besonders geeignet erwiesen hat, da dann eine besonders gute Performanz der Zelle beobachtet werden kann und die Ammoniakausbeute steigt.

Das erzeugte Ammoniak steht dann für eine weitere Verwendung zur Verfügung. Es kann einer Speichereinrichtung zugeführt werden.

Über die Zirkulationsleitung 12 kann in der kathodischen Halbzelle 6 der Hauptzelle 2 erhaltener Stickstoff zurück zur Eingangsseite der kathodischen Halbzelle 6 der Hauptzelle 2 geführt und erneut als Input für diese genutzt werden.

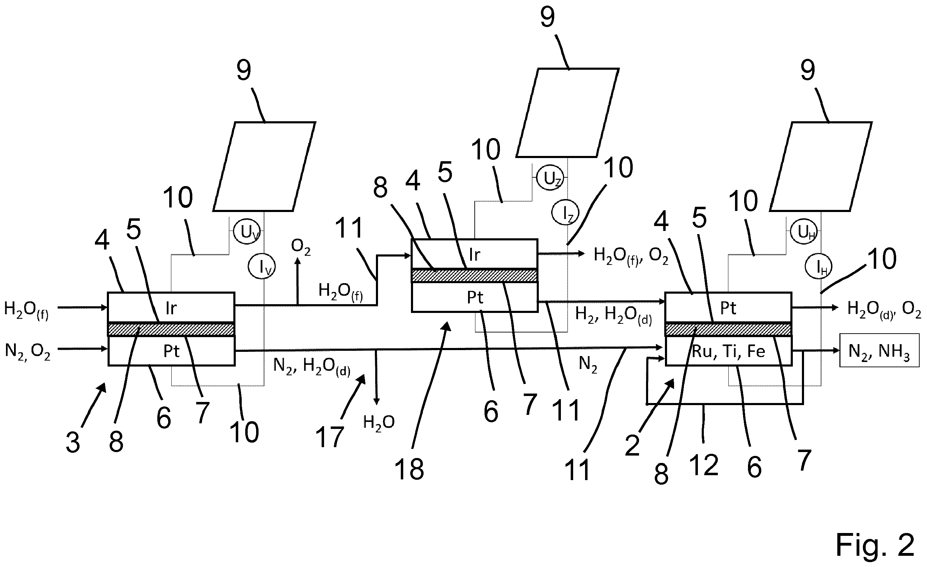

Die Figur 2 zeigt ein Ausführungsbeispiel einer erfindungsgemäßen Vorrichtung zur Synthese von Ammoniak, die sich von derjenigen gemäß Figur 1 im Wesentlichen dadurch unterscheidet, dass sie eine der Vorzelle 3 nachgeschaltete und der Hauptzelle 2 vorgeschaltete Zwischenzelle 18, also noch eine dritte Zelle umfasst, und, dass sich die Anode 5 in der anodischen Halbzelle 6 der Hauptzelle 2 dieser Vorrichtung durch ein anderes Katalysatormaterial als Iridium, nämlich Platin auszeichnet.

Die Vorzelle 3 der Vorrichtung aus Figur 2 ist zu der Vorzelle 3 der Vorrichtung aus Figur 1 baugleich und auch die Katalysatormaterialien von Anode 5 und Kathode 7 dieser stimmen mit denen der Vorzelle 3 aus Figur 1 überein. Es handelt sich um identisch ausgestaltete Zellen.

Die Zwischenzelle 18 der Vorrichtung aus Figur 2 ist zu der Vorzelle 3 dieser Vorrichtung - und somit auch zu der Vorzelle 3 aus Figur 1 - baugleich und hat die gleichen Katalysatormaterialien, nämlich Iridium, was die Anode 5 betrifft, und Platin, was die Kathode 7 angeht. Mit anderen Worten hat die Vorrichtung 1 aus Figur 2 zwei Mal die gleiche elektrochemische Zelle, die jedoch anders genutzt werden, worauf weiter unten noch näher eingegangen wird.

Der Zwischenzelle 18 ist noch eine weitere Photovoltaikzelle 9 zugeordnete, welche Zwischenzellenspannungsmittel zur Bereitstellung einer Zwischenzellenspannung Uz zwischen der Anode 5 und Kathode 7 der Zwischenzelle 18 bildet. Auch hier ist die zugehörige elektrische Verbindung über elektrische Leitungen 10 hergestellt.

Die Vorrichtung aus Figur 2 umfasst ferner Fluidverbindungsmittel zur fluidtechnischen Verbindung der anodischen Halbzelle 4 der Vorzelle 3 mit der anodischen Halbzelle 4 der Zwischenzelle 18 und Fluidverbindungsmittel zur fluidtechnischen Verbindung der kathodischen Halbzelle 6 der Zwischenzelle 18 mit der anodischen Halbzelle 4 der Hauptzelle 2. Diese Fluidverbindungsmittel umfassen hier ebenfalls wenigstens eine Fluidleitung, konkret wenigstens ein Rohr, bzw. sind dadurch gegeben.

Mit der Vorrichtung aus Figur 2 kann ein Ausführungsbeispiel des erfindungsgemäßen Verfahrens durchgeführt werden. Hierzu wird zwischen der Anode 5 und Kathode 7 der Zwischenzelle 18 eine Zwischenzellenspannung Uz im Bereich von 1,48 bis 2 V angelegt. Die Spannungsbereitstellung erfolgt umweltfreundlich und nachhaltig mittels der der Zwischenzelle 18 zugeordneten Photovoltaikzelle 9.

Was die Vorzelle 3 angeht, ist der Ablauf genau wie bei dem vorstehend beschriebenen ersten Ausführungsbeispiel. Das bedeutet, der anodischen Halbzelle 4 der Vorzelle 3 wird Wasser H₂O und gleichzeitig der kathodische Halbzelle 6 der Vorzelle 3 Stickstoff N₂ und Sauerstoff O₂ in Form von Luft zugeführt. Das Wasser wird bei dem dargestellten Beispiel in flüssiger Form zugeführt. In der anodischen Halbzelle 4 der Vorzelle 3 wird Sauerstoff erhalten und in der kathodischen Halbzelle 6 der Vorzelle 3 Stickstoff und Wasser. Die Kathode 7 der Vorzelle 3 der Vorrichtung aus Figur 2 dient somit ebenfalls als Sauerstoffverzehrkathode.

Von dem die anodischen Halbzelle 4 der Vorzelle 3 verlassenden Wasser und Sauerstoff wird Sauerstoff separiert, was in der Figur 2 wiederum durch einen abzweigenden Pfeil angedeutet ist, und das übrig bleibende Wasser wird in flüssigem Zustand der anodischen Halbzelle 4 der Zwischenzelle 18 zugeführt. Der kathodischen Halbzelle 6 der Zwischenzelle 18 hingegen wird nichts zugeführt.

In der anodischen Halbzelle 4 der Zwischenzelle 18 wird Wasser eingespeist und Sauerstoff entsteht in der elektrochemischen Reaktion, und in der kathodischen Halbzelle 6 der Zwischenzelle 18 wird in einer elektrochemischen Reaktion Wasserstoff entwickelt. Gleichzeitig permeiert Wasser durch die Membran und sammelt sich in der Halbzelle 6Die Betriebstemperatur in der Zwischenzelle 18 kann insbesondere bis zu 90°C betragen.

Der in der kathodischen Halbzelle 6 der Zwischenzelle 18 erhaltene Wasserstoff und das dort erhaltene Wasser werden der anodischen Halbzelle 4 der Hauptzelle 2 zugeführt. Auf dem Weg zur Hauptzelle 2 kann eventuell flüssig anfallendes Wasser abgeschieden oder in einer Verdampfungseinrichtung verdampft werden.

Der kathodischen Halbzelle 6 der Hauptzelle wird - genau wie in Figur 1 - Stickstoff zugeführt, welcher in der kathodischen Halbzelle 6 der Vorzelle 3 erhalten wurde. Dieser kann über die diese beiden Halbzellen 6 fluidtechnische Verbindungsmittel 11 aus der kathodischen Halbzelle 6 der Vorzelle 3 zu der kathodischen Halbzelle 6 der Hauptzelle 2 gelangen. Da kathodenseitig die Zwischenzelle 18 keine Rolle spielt, kann man auch sagen, dass diese anodenseitig zwischen die Vor- und die Hauptzelle 2 geschaltet ist.

Bei dem Beispiel gemäß Figur 2 gilt - wieder in Übereinstimmung mit Figur 1 -, dass in der anodischen Halbzelle 4 der Hauptzelle 2 Sauerstoff erhalten wird und in der kathodischen Halbzelle 6 der Hauptzelle 2 Ammoniak. Das erzeugte Ammoniak steht dann auch hier für eine weiteren Verwendung zur Verfügung. Es kann einer Speichereinrichtung zugeführt werden.

Über die Zirkulationsleitung 12 kann aus der kathodischen Halbzelle 6 der Hauptzelle 2 austretender Stickstoff zurück zur Eingangsseite der kathodischen Halbzelle 6 der Hauptzelle 2 geführt und erneut als Input für diese genutzt werden.

Das dargestellte Ausführungsbeispiele einer erfindungsgemäßer Vorrichtung 1 und das darin durchgeführten Ausführungsbeispiel eines erfindungsgemäßen Verfahrens ermöglichen die solare Erzeugung von Ammoniak aus Luft und Wasser. Sie zeichnen sich durch eine sehr Nachhaltigkeit und Umweltfreundlichkeit aus.

## Patentansprüche

1. Verfahren zur Synthese von Ammoniak, bei dem
- eine elektrochemische Hauptzelle (2), die eine anodische Halbzelle (4) mit einer Anode (5) und eine kathodische Halbzelle (6) mit einer Kathode (7) umfasst, wobei zwischen der anodischen (4) und der kathodischen Halbzelle (6) eine Membran (8) angeordnet ist, durch welche Protonen aus der anodischen (4) in die kathodische Halbzelle (6) gelangen können, und wobei die Anode (5) wenigstens ein Katalysatormaterial, insbesondere Iridium und/oder Ruthenium und/oder Platin, umfasst und die Kathode (7) wenigstens ein Katalysatormaterial, insbesondere Ruthenium und/oder Titan und/oder Eisen, bevorzugt Ruthenium und Titan und Eisen, umfasst, bereitgestellt wird,
**dadurch gekennzeichnet, dass**
- eine der Hauptzelle (2) vorgeschaltete elektrochemische Vorzelle (3), die eine anodische Halbzelle (4) mit einer Anode (5) und eine kathodische Halbzelle (6) mit einer Kathode (7) umfasst, wobei zwischen der anodischen (4) und der kathodischen Halbzelle (6) eine Membran (8) angeordnet ist, durch welche Protonen aus der anodischen (4) in die kathodische Halbzelle (6) gelangen können, und wobei die Anode (5) wenigstens ein Katalysatormaterial, insbesondere Iridium und/oder Ruthenium, umfasst und die Kathode (7) wenigstens ein Katalysatormaterial, insbesondere Platin, umfasst, bereitgestellt wird,
- zwischen der Anode (5) und Kathode (7) der Vorzelle (3) eine Spannung, Vorzellenspannung (Uv), angelegt wird und zwischen der Anode (5) und der Kathode (7) der Hauptzelle (2) eine Spannung, Hauptzellenspannung (U_{H}), angelegt wird,
- der anodischen Halbzelle (4) der Vorzelle (3) Wasser und der kathodische Halbzelle (6) der Vorzelle (3) Stickstoff und Sauerstoff, insbesondere Luft, zugeführt wird,
- in der anodischen Halbzelle (4) der Vorzelle (3) Sauerstoff erhalten wird und in der kathodischen Halbzelle (6) der Vorzelle (3) Stickstoff und Wasser erhalten werden,
- der anodischen Halbzelle (4) der Hauptzelle (2) Wasser, insbesondere dampfförmiges Wasser, zugeführt wird, und der kathodischen Halbzelle (6) der Hauptzelle (2) Stickstoff, der in der kathodischen Halbzelle (6) der Vorzelle (3) erhalten wurde, zugeführt wird, und
- in der anodischen Halbzelle (4) der Hauptzelle (2) Sauerstoff erhalten wird, und in der kathodischen Halbzelle (6) der Hauptzelle (2) Ammoniak erhalten wird,
- wobei eine der Vorzelle (3) nachgeschaltete und der Hauptzelle (2) vorgeschaltete Zwischenzelle (18), die eine anodische Halbzelle (4) mit einer Anode (5) und eine kathodische Halbzelle (6) mit einer Kathode (7) umfasst, wobei zwischen der anodischen (4) und der kathodischen Halbzelle (6) eine Membran (8) angeordnet ist, durch welche Protonen aus der anodischen (4) in die kathodische Halbzelle (6) gelangen können, und wobei die Anode (5) wenigstens ein Katalysatormaterial, insbesondere Iridium und/oder Ruthenium, umfasst und die Kathode (7) wenigstens ein Katalysatormaterial, insbesondere Platin, umfasst, bereitgestellt wird,
- zwischen der Anode (5) und Kathode (7) der Zwischenzelle (18) eine Spannung, Zwischenzellenspannung (Uz), angelegt wird, und
- der anodischen Halbzelle (4) der Zwischenzelle (18) Wasser zugeführt wird, welches in der anodischen Halbzelle (4) der Vorzelle (3) erhalten wurde, und bevorzugt der kathodischen Halbzelle (6) der Zwischenzelle (18) keine Stoffe zugeführt werden, und
- in der anodischen Halbzelle (4) der Zwischenzelle (18) Sauerstoff erhalten wird, und in der kathodischen Halbzelle (6) der Zwischenzelle (18) Wasserstoff und permeierendes Wasser erhalten werden, und
- der anodischen Halbzelle (4) der Hauptzelle (2) Wasserstoff und Wasser, die in der kathodischen Halbzelle (6) der Zwischenzelle (18) erhalten wurden, zugeführt werden, wobei das Wasser insbesondere in verdampftem Zustand zugeführt wird.

2. Verfahren nach Anspruch 1, **dadurch gekennzeichnet, dass** die Anode (5) der Hauptzelle (2) als Katalysatormaterial Platin umfasst.

3. Verfahren nach einem der vorhergehenden Ansprüche, **dadurch gekennzeichnet, dass** eine Zwischenzellenspannung (Uz) im Bereich von 1,2 bis 2,5 Volt, bevorzugt im Bereich von 1,48 bis 2 Volt angelegt wird.

4. Verfahren nach einem der vorhergehenden Ansprüche, **dadurch gekennzeichnet, dass**
für die Bereitstellung der Zwischenzellenspannung (Uz) Solarenergie genutzt wird, insbesondere, wobei die Zwischenzellenspannung (Uz) mittels wenigstens einer Photovoltaikzelle (9) bereitgestellt wird.

5. Verfahren nach einem der vorhergehenden Ansprüche, **dadurch gekennzeichnet, dass** eine Vorzellenspannung (Uv) von weniger als 1,7 Volt, bevorzugt von weniger als 1,48 Volt, besonders bevorzugt von weniger als 1,23 Volt angelegt wird, und/oder dass eine Hauptzellenspannung (U_{H}) im Bereich von 1 bis 3 Volt, bevorzugt im Bereich von 1,7 bis 2,7 Volt, besonders bevorzugt 1,2 bis 1,3 Volt angelegt wird.

6. Verfahren nach einem der vorhergehenden Ansprüche, **dadurch gekennzeichnet, dass** für die Bereitstellung der Vorzellenspannung (Uv) und/oder für die Bereitstellung der Hauptzellenspannung (U_{H}) Solarenergie genutzt wird, insbesondere, wobei die Vorzellenspannung (Uv) und/oder die Hauptzellenspannung (U_{H}) mittels wenigstens einer Photovoltaikzelle (9) bereitgestellt wird, bevorzugt, wobei von einer der Vorzelle (3) zugeordneten Photovoltaikzelle (9) die Vorzellenspannung (Uv) bereitgestellt wird und von einer weiteren, der Hauptzelle (2) zugeordneten Photovoltaikzelle (9) die Hauptzellenspannung (U_{H}) bereitgestellt wird.

7. Verfahren nach einem der vorhergehenden Ansprüche, **dadurch gekennzeichnet, dass** von dem in der kathodischen Halbzelle (4) der Vorzelle (3) erhaltenen Stickstoff und Wasser das Wasser abgeschieden wird, insbesondere mittels einer zwischen der Vor- (3) und der Hauptzelle (2) vorgesehenen Kühl- und/oder Abscheideeinrichtung (17).

8. Verfahren nach einem der vorhergehenden Ansprüche, **dadurch gekennzeichnet, dass** der anodischen Halbzelle (4) der Hauptzelle (2) dampfförmiges Wasser zugeführt wird, insbesondere, wobei eine der Hauptzelle (2) vorgeschaltete Verdampfungseinrichtung (13) verwendet wird, um das dampfförmige Wasser zu erhalten, bevorzugt, wobei die Verdampfungseinrichtung (13) wenigstens einen solarthermischen Kollektor (14) umfasst oder mit wenigstens einem solarthermischen Kollektor (14) gekoppelt ist.

9. Verfahren nach einem der vorhergehenden Ansprüche, **dadurch gekennzeichnet, dass** aus der kathodischen Halbzelle (6) der Hauptzelle (2) austretender Stickstoff der kathodischen Halbzelle (6) der Hauptzelle (2) erneut zugeführt wird.

10. Vorrichtung (1) zur Synthese von Ammoniak mittels des Verfahrens nach Anspruch 1, umfassend
- eine elektrochemische Hauptzelle (2), die eine anodische Halbzelle (4) mit einer Anode (5) und eine kathodische Halbzelle (6) mit einer Kathode (7) umfasst, wobei zwischen der anodischen (4) und der kathodischen Halbzelle (6) eine Membran (8) angeordnet ist, durch welche Protonen aus der anodischen (4) in die kathodische Halbzelle (6) gelangen können, und wobei die Anode (5) wenigstens ein Katalysatormaterial, insbesondere Iridium und/oder Ruthenium und/oder Platin, umfasst und die Kathode (7) wenigstens ein Katalysatormaterial, insbesondere Ruthenium und/oder Titan und/oder Eisen, bevorzugt Ruthenium und Titan und Eisen, umfasst,
- Hauptzellenspannungsmittel (9) zur Bereitstellung einer Spannung (U_{H}) zwischen der Anode (5) und der Kathode (7),
**dadurch gekennzeichnet, dass** die Vorrichtung weiterhin umfasst
- eine der Hauptzelle (2) vorgeschaltete elektrochemische Vorzelle (3), die eine anodische Halbzelle (4) mit einer Anode (5) und eine kathodische Halbzelle (6) mit einer Kathode (7) umfasst, wobei zwischen der anodischen (4) und der kathodischen Halbzelle (6) eine Membran (8) angeordnet ist, durch welche Protonen aus der anodischen (4) in die kathodische Halbzelle (6) gelangen können, und wobei die Anode (5) wenigstens ein Katalysatormaterial, insbesondere Iridium und/oder Ruthenium, umfasst, und die Kathode (7) wenigstens ein Katalysatormaterial, insbesondere Platin, umfasst,
- Vorzellenspannungsmittel (9) zur Bereitstellung einer Spannung (Uv) zwischen der Anode (5) und Kathode (7) der Vorzelle (3), und
- Fluidverbindungsmittel (11) zur fluidtechnischen Verbindung der kathodischen Halbzelle (6) der Vorzelle (3) mit der kathodischen Halbzelle (6) der Hauptzelle (2),
- eine der Vorzelle (3) nachgeschaltete und der Hauptzelle (2) vorgeschaltete Zwischenzelle (18), die eine anodische Halbzelle (4) mit einer Anode (5) und eine kathodische Halbzelle (6) mit einer Kathode (7) umfasst, wobei zwischen der anodischen (4) und der kathodischen Halbzelle (6) eine Membran (8) angeordnet ist, durch welche Protonen aus der anodischen (4) in die kathodische Halbzelle (6) gelangen können, und wobei die Anode (5) wenigstens ein Katalysatormaterial, insbesondere Iridium und/oder Ruthenium, umfasst, und die Kathode (7) wenigstens ein Katalysatormaterial, insbesondere Platin, umfasst, und
- Zwischenzellenspannungsmittel (9) zur Bereitstellung einer Spannung (Uz) zwischen der Anode (5) und Kathode (7) der Zwischenzelle (18),
- Fluidverbindungsmittel (11) zur fluidtechnischen Verbindung der anodischen Halbzelle (4) der Vorzelle (3) mit der anodischen Halbzelle (4) der Zwischenzelle (18),
- Fluidverbindungsmittel (11) zur fluidtechnischen Verbindung der kathodischen Halbzelle (6) der Zwischenzelle (18) mit der anodischen Halbzelle (4) der Hauptzelle (2).

11. Vorrichtung (1) nach Anspruch 10, **dadurch gekennzeichnet, dass** die Anode (5) der Hauptzelle (2) als Katalysatormaterial Platin umfasst.

12. Vorrichtung (1) nach einem der Ansprüche 10 oder 11, **dadurch gekennzeichnet, dass** die Zwischenzellenspannungsmittel (9) dazu ausgebildet ist, eine Spannung (Uz) im Bereich von 1,2 bis 2,5 Volt, bevorzugt im Bereich von 1,48 bis 2 Volt bereitzustellen.

13. Vorrichtung (1) nach einem der Ansprüche 10 bis 12, **dadurch gekennzeichnet, dass** die Zwischenzellenspannungsmittel wenigstens eine Photovoltaikzelle (9) umfassen oder durch wenigstens eine Photovoltaikzelle (9) gegeben sind.

14. Vorrichtung nach einem der Ansprüche 10 bis 13, **dadurch gekennzeichnet, dass** die Vorzellenspannungsmittel (9) dazu ausgebildet sind, eine Spannung (Uv) von weniger als 1,7 Volt, bevorzugt von weniger als 1,48 Volt, besonders bevorzugt von weniger als 1,23 Volt bereitzustellen, und/oder dass die Hauptzellenspannungsmittel (9) dazu ausgebildet sind, eine Spannung (U_{H}) im Bereich von 1 bis 3 Volt, bevorzugt im Bereich von 1,7 bis 2,7 Volt, besonders bevorzugt 1,2 bis 1,3 Volt bereitzustellen.

15. Vorrichtung nach einem der Ansprüche 10 bis 14, **dadurch gekennzeichnet, dass** die Vorzellenspannungsmittel wenigstens eine Photovoltaikzelle (9) umfassen oder durch wenigstens eine Photovoltaikzelle (9) gegeben sind, und/oder dass die Hauptzellenspannungsmittel wenigstens eine Photovoltaikzelle (9) umfassen oder durch wenigstens eine Photovoltaikzelle (9) gegeben sind.

16. Vorrichtung nach einem der Ansprüche 10 bis 15, **dadurch gekennzeichnet, dass** eine der kathodischen Halbzelle (6) der Hauptzelle (2) vorgeschaltete Abscheideeinrichtung (17) vorgesehen ist, so dass Wasser abgeschieden werden kann, bevor es die kathodische Halbzelle (6) der Hauptzelle (2) erreicht.

17. Vorrichtung (1) nach einem der Ansprüche 10 bis 16, **dadurch gekennzeichnet, dass** eine der anodischen Halbzelle (4) der Hauptzelle (2) vorgeschaltete Verdampfungseinrichtung (13) vorgesehen ist, bevorzugt, wobei die Verdampfungseinrichtung (13) eingangsseitig mit der anodischen Halbzelle (4) der Vorzelle (3) fluidtechnisch verbunden ist, und/oder wobei die Verdampfungseinrichtung (13) wenigstens einen solarthermischen Kollektor (14) umfasst.

18. Vorrichtung (1) nach einem der Ansprüche 10 bis 17, **dadurch gekennzeichnet, dass** wenigstens eine Zirkulationsleitung (12) vorgesehen ist, mittels derer aus der kathodischen Halbzelle (6) der Hauptzelle (2) austretender Stickstoff der kathodischen Halbzelle (6) eingangsseitig wieder zugeführt werden kann.

## Claims

1. Method for synthesis of ammonia, wherein
- an electrochemical main cell (2) comprising an anodic half-cell (4) with an anode (5) and a cathodic half-cell (6) with a cathode (7) is provided, wherein a membrane (8) is arranged between the anodic (4) and the cathodic half-cell (6), through which protons can pass from the anodic (4) into the cathodic half-cell (6), and wherein the anode (5) comprises at least one catalyst material, in particular iridium and/or ruthenium and/or platinum, and the cathode (7) comprises at least one catalyst material, in particular ruthenium and/or titanium and/or iron, preferably ruthenium and titanium and iron,
**characterized in that**
- an electrochemical pre-cell (3), which is connected upstream of the main cell (2) and which comprises an anodic half-cell (4) with an anode (5) and a cathodic half-cell (6) with a cathode (7), is provided, wherein a membrane (8) is arranged between the anodic half-cell (4) and the cathodic half-cell (6), through which protons can pass from the anodic (4) into the cathodic half-cell (6), and wherein the anode (5) comprises at least one catalyst material, in particular iridium and/or ruthenium, and the cathode (7) comprises at least one catalyst material, in particular platinum,
- a voltage is applied between the anode (5) and cathode (7) of the pre-cell (3), pre-cell voltage (Uv), and a voltage is applied between the anode (5) and cathode (7) of the main cell (2), main cell voltage (U_{H}),
- water is supplied to the anodic half-cell (4) of the pre-cell (3) and nitrogen and oxygen, in particular air, are supplied to the cathodic half-cell (6) of the pre-cell (3),
- oxygen is obtained in the anodic half-cell (4) of the pre-cell (3) and nitrogen and water are obtained in the cathodic half-cell (6) of the pre-cell (3),
- water, in particular vaporous water, is supplied to the anodic half-cell (4) of the main cell (2), and nitrogen obtained in the cathodic half-cell (6) of the pre-cell (3) is supplied to the cathodic half-cell (6) of the main cell (2), and
- oxygen is obtained in the anodic half-cell (4) of the main cell (2), and ammonia is obtained in the cathodic half-cell (6) of the main cell (2),
- wherein an intermediate cell (18), which is connected downstream of the pre-cell (3) and upstream of the main cell (2) and which comprises an anodic half-cell (4) with an anode (5) and a cathodic half-cell (6) with a cathode (7), is provided, wherein a membrane (8), is arranged between the anodic half-cell (4) and the cathodic half-cell (6), through which protons can pass from the anodic (4) into the cathodic half-cell (6), and wherein the anode (5) comprises at least one catalyst material, in particular iridium and/or ruthenium, and the cathode (7) comprises at least one catalyst material, in particular platinum,
- a voltage is applied between the anode (5) and cathode (7) of the intermediate cell (18), intermediate cell voltage (Uz), and
- water is supplied to the anodic half-cell (4) of the intermediate cell (18), in particular water which was obtained in the anodic half-cell (4) of the pre-cell (3), and preferably no substances are supplied to the cathodic half-cell (6) of the intermediate cell (18), and
- oxygen is obtained in the anodic half-cell (4) of the intermediate cell (18), and hydrogen and permeating water are obtained in the cathodic half-cell (6) of the intermediate cell (18), and
- hydrogen and water obtained in the cathodic half-cell (6) of the intermediate cell (18) are supplied to the anodic half-cell (4) of the main cell (2), the water particularly being supplied in the vaporized state.

2. Method according to claim 1, **characterized in that** the anode (5) of the main cell (2) comprises platinum as catalyst material.

3. Method according to any of the preceding claims, **characterized in that** an intermediate cell voltage (Uz) in the range of 1,2 to 2,5 volts, preferably in the range of 1,48 to 2 volts, is applied.

4. Method according to any of the preceding claims, **characterized in that** solar energy is used to provide the intermediate cell voltage (Uz), in particular, wherein the intermediate cell voltage (Uz) is provided by means of at least one photovoltaic cell (9).

5. Method according to one of the preceding claims, **characterized in that** a pre-cell voltage (Uv) of less than 1,7 volts, preferably of less than 1,48 volts, particularly preferably of less than 1,23 volts, is applied, and/or **in that** a main cell voltage (U_{H}) in the range of 1 to 3 volts, preferably in the range of 1,7 to 2,7 volts, particularly preferably 1,2 to 1,3 volts, is applied.

6. Method according to one of the preceding claims, **characterized in that** solar energy is used for providing the pre-cell voltage (Uv) and/or for providing the main cell voltage (U_{H}), in particular, wherein the pre-cell voltage (Uv) and/or the main cell voltage (U_{H}) is provided by means of at least one photovoltaic cell (9), preferably, wherein the pre-cell voltage (Uv) is provided by a photovoltaic cell (9) associated with the pre-cell (3) and the main cell voltage (U_{H}) is provided by a further photovoltaic cell (9) associated with the main cell (2).

7. Method according to one of the preceding claims, **characterized in that** the water is separated from the nitrogen and water obtained in the cathodic half-cell (4) of the pre-cell (3), in particular by means of a cooling and/or separating device (17) provided between the pre-cell (3) and the main cell (2).

8. Method according to one of the preceding claims, **characterized in that** vaporous water is supplied to the anodic half-cell (4) of the main cell (2), in particular, wherein an evaporation device (13) connected upstream of the main cell (2) is used to obtain the vaporous water, preferably, wherein the evaporation device (13) comprises at least one solar thermal collector (14) or is coupled to at least one solar thermal collector (14).

9. Method according to one of the preceding claims, **characterized in that** nitrogen exiting from the cathodic half-cell (6) of the main cell (2) is supplied again to the cathodic half-cell (6) of the main cell (2).

10. Apparatus (1) for synthesis of ammonia by use of the method according to claim 1, comprising
- an electrochemical main cell (2) comprising an anodic half-cell (4) with an anode (5) and a cathodic half-cell (6) with a cathode (7), wherein a membrane (8) is arranged between the anodic half-cell (4) and the cathodic half-cell (6), through which protons can pass from the anodic (4) into the cathodic half-cell (6), and wherein the anode (5) comprises at least one catalyst material, in particular iridium and/or ruthenium and/or platinum, and the cathode (7) comprises at least one catalyst material, in particular ruthenium and/or titanium and/or iron, preferably ruthenium and titanium and iron,
- main cell voltage means (9) for providing a voltage (U_{H}) between the anode (5) and the cathode (7),
**characterized in that** the apparatus further comprises
- an electrochemical pre-cell (3) connected upstream of the main cell (2), which comprises an anodic half-cell (4) with an anode (5) and a cathodic half-cell (6) with a cathode (7), wherein a membrane (8) is arranged between the anodic half-cell (4) and the cathodic half-cell (6), through which protons can pass from the anodic (4) into the cathodic half-cell (6), and wherein the anode (5) comprises at least one catalyst material, in particular iridium and/or ruthenium, and the cathode (7) comprises at least one catalyst material, in particular platinum,
- pre-cell voltage means (9) for providing a voltage (Uv) between the anode (5) and cathode (7) of the pre-cell (3), and
- fluid connection means (11) for fluidically connecting the cathodic half-cell (6) of the pre-cell (3) to the cathodic half-cell (6) of the main cell (2),
- an intermediate cell (18), which is connected downstream of the pre-cell (3) and upstream of the main cell (2), and which comprises an anodic half-cell (4) with an anode (5) and a cathodic half-cell (6) with a cathode (7), wherein a membrane (8) is arranged between the anodic half-cell (4) and the cathodic half-cell (6), through which protons can pass from the anodic (4) into the cathodic half-cell (6), and where the anode (5) comprises at least one catalyst material, in particular iridium and/or ruthenium, and the cathode (7) comprises at least one catalyst material, in particular platinum, and
- intermediate cell voltage means (9) for providing a voltage (Uz) between the anode (5) and cathode (7) of the intermediate cell (18),
- fluid connection means (11) for fluidically connecting the anodic half-cell (4) of the pre-cell (3) to the anodic half-cell (4) of the intermediate cell (18),
- fluid connection means (11) for fluidically connecting the cathodic half-cell (6) of the intermediate cell (18) to the anodic half-cell (4) of the main cell (2).

11. Apparatus (1) according to claim 10, **characterized in that** the anode (5) of the main cell (2) comprises platinum as catalyst material.

12. Apparatus (1) according to claim 10 or 11, **characterized in that** the intermediate cell voltage means (9) are designed to provide a voltage (Uz) in the range of 1,2 to 2,5 volts, preferably in the range of 1,48 to 2 volts.

13. Apparatus (1) according to any one of claims 10 to 12, **characterized in that** the intermediate cell voltage means comprise at least one photovoltaic cell (9) or are given by at least one photovoltaic cell (9).

14. Apparatus according to any one of claims 10 to 13, **characterized in that** the pre-cell voltage means (9) are designed to provide a voltage (Uv) of less than 1,7 volts, preferably of less than 1,48 volts, particularly preferably of less than 1,23 volts, and/or that the main cell voltage means (9) are designed to provide a voltage (U_{H}) in the range of 1 to 3 volts, preferably in the range of 1,7 to 2,7 volts, particularly preferably 1,2 to 1,3 volts.

15. Apparatus according to any one of claims 10 to 14, **characterized in that** the pre-cell voltage means comprise at least one photovoltaic cell (9) or are given by at least one photovoltaic cell (9), and/or that the main cell voltage means comprise at least one photovoltaic cell (9) or are given by at least one photovoltaic cell (9).

16. Apparatus according to any one of claims 10 to 15, **characterized in that** a separating device (17) connected upstream of the cathodic half-cell (6) of the main cell (2) is provided, so that water can be separated before it reaches the cathodic half-cell (6) of the main cell (2).

17. Apparatus (1) according to one of claims 10 to 16, **characterized in that** an evaporation device (13) connected upstream of the anodic half-cell (4) of the main cell (2) is provided, preferably, wherein the evaporation device (13) on the input side is fluidically connected to the anodic half-cell (4) of the pre-cell (3), and/or wherein the evaporation device (13) comprises at least one solar thermal collector (14).

18. Apparatus (1) according to one of claims 10 to 17, **characterized in that** at least one circulation pipe (12) is provided, by means of which nitrogen emerging from the cathodic half-cell (6) of the main cell (2) can be fed back to the input side of the cathodic half-cell (6).

## Revendications

1. Procédé pour la synthèse d'ammoniac,
- une cellule électrochimique principale (2), qui comprend une demi-cellule anodique (4) avec une anode (5) et une demi-cellule cathodique (6) avec une cathode (7), une membrane (8) étant disposée entre la demi-cellule anodique (4) et la demi-cellule cathodique (6), à travers laquelle membrane (8) des protons peuvent passer de la demi-cellule anodique (4) dans la demi-cellule cathodique (6), et l'anode (5) comprenant au moins un matériau catalyseur, en particulier de l'iridium et/ou du ruthénium et/ou du platine, et la cathode (7) comprenant au moins un matériau catalyseur, en particulier du ruthénium et/ou du titane et/ou du fer, de préférence du ruthénium et du titane et du fer, **caractérisé en ce que**
- une pré-cellule électrochimique (3) placée en amont de la cellule principale (2) est prévue, laquelle pré-cellule electrochimique (3) comprend une demi-cellule anodique (4) avec une anode (5) et une demi-cellule cathodique (6) avec une cathode (7), une membrane (8) étant disposée entre la demi-cellule anodique (4) et la demi-cellule cathodique (6), à travers laquelle des protons peuvent passer de la demi-cellule anodique (4) à la demi-cellule cathodique (6), et l'anode (5) comprenant au moins un matériau catalyseur, en particulier de l'iridium et/ou du ruthénium, et la cathode (7) comprend au moins un matériau catalyseur, en particulier du platine,
- une tension, tension de pré-cellule (U_{V}), est appliquée entre l'anode (5) et la cathode (7) de la pré-cellule (3) et une tension, tension de cellule principale (U_{H}), est appliquée entre l'anode (5) et la cathode (7) de la cellule principale (2),
- de l'eau est amenée à la demi-cellule anodique (4) de la pré-cellule (3) et de l'azote et de l'oxygène, en particulier de l'air, à la demi-cellule cathodique (6) de la pré-cellule (3),
- de l'oxygène est obtenu dans la demi-cellule anodique (4) de la pré-cellule (3) et de l'azote et de l'eau sont obtenus dans la demi-cellule cathodique (6) de la pré-cellule (3),
- de l'eau, en particulier de l'eau sous forme de vapeur, est amenée à la demi-cellule anodique (4) de la cellule principale (2), et de l'azote, qui a été obtenu dans la demi-cellule cathodique (6) de la pré-cellule (3), est amené à la demi-cellule cathodique (6) de la cellule principale (2), et
- de l'oxygène est obtenu dans la demi-cellule anodique (4) de la cellule principale (2), et de l'ammoniac est obtenu dans la demi-cellule cathodique (6) de la cellule principale (2),
- une cellule intermédiaire (18) est prévue, qui est placée en aval de la pré-cellule (3) et en amont de la cellule principale (2) et qui comprend une demi-cellule anodique (4) avec une anode (5) et une demi-cellule cathodique (6) avec une cathode (7), une membrane (8) étant disposée entre la demi-cellule anodique (4) et la demi-cellule cathodique (6), à travers laquelle des protons peuvent passer de la demi-cellule anodique (4) à la demi-cellule cathodique (6), et l'anode (5) comprenant au moins un matériau catalyseur, en particulier de l'iridium et/ou du ruthénium, et la cathode (7) comprenant au moins un matériau catalyseur, en particulier du platine,
- une tension, tension de cellule intermédiaire (U_{Z}), est appliquée entre l'anode (5) et la cathode (7) de la cellule intermédiaire (18), et
- de l'eau est amenée à la demi-cellule anodique (4) de la cellule intermédiaire (18), laquelle a été obtenue dans la demi-cellule anodique (4) de la pré-cellule (3), et de préférence aucune substance n'est amenée à la demi-cellule cathodique (6) de la cellule intermédiaire (18), et
- de l'oxygène étant obtenu dans la demi-cellule anodique (4) de la cellule intermédiaire (18), et de l'hydrogène et de l'eau perméante étant obtenes dans la demi-cellule cathodique (6) de la cellule intermédiaire (18), et
- la demi-cellule anodique (4) de la cellule principale (2) est alimenté en hydrogène et en eau obtenus dans la demi-cellule cathodique (6) de la cellule intermédiaire (18), l'eau en particular étant alimentée à l'état vaporisé.

2. Procédé selon la revendication 1, **caractérisé en ce que** l'anode (5) de la cellule principale (2) comprend du platine comme matériau catalyseur.

3. Procédé selon l'une des revendications précédentes, **caractérisé en ce qu'**une tension de cellule intermédiaire (U_{Z}) est appliquée dans la plage de 1,2 à 2,5 volts, de préférence dans la plage de 1,48 à 2 volts.

4. Procédé selon l'une des revendications précédentes, **caractérisé en ce que** l'énergie solaire est utilisée pour fournir la tension de cellule intermédiaire (U_{Z}), en particulier, la tension de cellule intermédiaire (U_{Z}) étant fournie au moyen d'au moins une cellule photovoltaïque (9).

5. Procédé selon l'une des revendications précédentes, **caractérisé en ce qu'**on applique une tension de pré-cellule (U_{V}) inférieure à 1,7 volt, de préférence inférieure à 1,48 volt, plus préférentiellement inférieure à 1,23 volt, et/ou **en ce qu'**on applique une tension de cellule principale (U_{H}) dans la plage de 1 à 3 volts, de préférence de 1,7 à 2,7 volts, plus préférentiellement de 1,2 à 1,3 volt.

6. Procédé selon l'une des revendications précédentes, **caractérisé en ce que** l'énergie solaire est utilisée pour la mise à disposition de la tension de pré-cellule (U_{V}) et/ou pour la mise à disposition de la tension de cellule principale (U_{H}), en particulier, la tension de pré-cellule (U_{V}) et/ou la tension de cellule principale (U_{H}) étant mise à disposition au moyen d'au moins une cellule photovoltaïque (9), de préférence, la tension de pré-cellule (U_{V}) étant fournie par une cellule photovoltaïque (9) associée à la pré-cellule (3) et la tension de cellule principale (U_{H}) étant fournie par une autre cellule photovoltaïque (9) associée à la cellule principale (2).

7. Procédé selon l'une des revendications précédentes, **caractérisé en ce que,** à partir de l'azote et de l'eau obtenus dans la demi-cellule cathodique (4) de la pré-cellule (3), on sépare l'eau, en particulier au moyen d'un dispositif de refroidissement et/ou de séparation (17) prévu entre la pré-cellule (3) et la cellule principale (2).

8. Procédé selon l'une des revendications précédentes, **caractérisé en ce que** la demi-cellule anodique (4) est alimenté de la cellule principale (2) en eau sous forme de vapeur, en particulier en utilisant un dispositif d'évaporation (13) en amont de la cellule principale (2) pour obtenir l'eau sous forme de vapeur, de preference, le dispositif d'évaporation (13) comprenant au moins un collecteur solaire thermique (14) ou est couplé à au moins un collecteur solaire thermique (14).

9. Procédé selon l'une des revendications précédentes, **caractérisé en ce que** l'azote sortant de la demi-cellule cathodique (6) de la cellule principale (2) est réintroduit dans la demi-cellule cathodique (6) de la cellule principale (2).

10. Dispositif (1) pour la synthèse d'ammoniac par le procédé selon la revendication 1, comprenant
- une cellule électrochimique principale (2), qui comprend une demi-cellule anodique (4) avec une anode (5) et une demi-cellule cathodique (6) avec une cathode (7), une membrane (8) étant disposée entre la demi-cellule anodique (4) et la demi-cellule cathodique (6), à travers laquelle des protons peuvent passer de la demi-cellule anodique (4) dans la demi-cellule cathodique (6), et l'anode (5) comprenant au moins un matériau catalyseur, en particulier de l'iridium et/ou du ruthénium et/ou du platine, et la cathode (7) comprenant au moins un matériau catalyseur, en particulier du ruthénium et/ou du titane et/ou du fer, de préférence du ruthénium et du titane et du fer,
- des moyens de tension de cellule principale (9) pour fournir une tension (U_{H}) entre l'anode (5) et la cathode (7),
**caractérisé en ce que** le dispositif comprend en outre
- une pré-cellule électrochimique (3) placée en amont de la cellule principale (2), laquelle pré-cellule (3) comprend une demi-cellule anodique (4) avec une anode (5) et une demi-cellule cathodique (6) avec une cathode (7), une membrane (8) étant disposée entre la demi-cellule anodique (4) et la demi-cellule cathodique (6), à travers laquelle des protons peuvent passer de la demi-cellule anodique (4) à la demi-cellule cathodique (6), l'anode (5) comprenant au moins un matériau catalyseur, en particulier de l'iridium et/ou du ruthénium, et la cathode (7) comprenant au moins un matériau catalyseur, en particulier du platine,
- des moyens de tension de pré-cellule (9) pour fournir une tension (U_{V}) entre l'anode (5) et la cathode (7) de la pré-cellule (3), et
- des moyens de liaison fluidique (11) pour la liaison fluidique de la demi-cellule cathodique (6) de la pré-cellule (3) avec la demi-cellule cathodique (6) de la cellule principale (2),
- une cellule intermédiaire (18) placée en aval de la cellule préliminaire (3) et en amont de la cellule principale (2), laquelle cellule intermédiaire (18) comprend une demi-cellule anodique (4) avec une anode (5) et une demi-cellule cathodique (6) avec une cathode (7), une membrane (8) étant disposée entre la demi-cellule anodique (4) et la demi-cellule cathodique (6), à travers laquelle des protons peuvent passer de la demi-cellule anodique (4) à la demi-cellule cathodique (6), l'anode (5) comprenant au moins un matériau catalyseur, en particulier de l'iridium et/ou du ruthénium, et la cathode (7) comprenant au moins un matériau catalyseur, en particulier du platine, et
- des moyens de tension de cellule intermédiaire (9) pour fournir une tension (U_{Z}) entre l'anode (5) et la cathode (7) de la cellule intermédiaire (18),
- des moyens de liaison fluidique (11) pour la liaison fluidique de la demi-cellule anodique (4) de la pré-cellule (3) avec la demi-cellule anodique (4) de la cellule intermédiaire (18),
- des moyens de liaison fluidique (11) pour la liaison fluidique de la demi-cellule cathodique (6) de la cellule intermédiaire (18) avec la demi-cellule anodique (4) de la cellule principale (2).

11. Dispositif (1) selon la revendication 10, **caractérisé en ce que** l'anode (5) de la cellule principale (2) comprend du platine comme matériau catalyseur.

12. Dispositif (1) selon l'une des revendications 10 ou 11, **caractérisé en ce que** les moyens de tension de cellule intermédiaire (9) sont adaptés pour fournir une tension (U_{Z}) comprise entre 1,2 et 2,5 volts, de préférence entre 1,48 et 2 volts.

13. Dispositif (1) selon l'une des revendications 10 à 12, **caractérisé en ce que** les moyens de tension de cellule intermédiaire comprennent au moins une cellule photovoltaïque (9) ou sont donnés par au moins une cellule photovoltaïque (9).

14. Dispositif selon l'une des revendications 10 à 13, **caractérisé en ce que** les moyens de tension de pré-cellule (9) sont adaptés pour fournir une tension (U_{V}) inférieure à 1,7 volt, de préférence inférieure à 1,48 volt, plus préférentiellement inférieure à 1,23 volt, et/ou **en ce que** les moyens de tension de cellule principale (9) sont adaptés pour fournir une tension (U_{H}) dans la plage de 1 à 3 volts, de préférence de 1,7 à 2,7 volts, plus préférentiellement de 1,2 à 1,3 volt.

15. Dispositif selon l'une des revendications 10 à 14, **caractérisé en ce que** les moyens de tension de pré-cellule comprennent au moins une cellule photovoltaïque (9) ou sont donnés par au moins une cellule photovoltaïque (9), et/ou **en ce que** les moyens de tension de cellule principale comprennent au moins une cellule photovoltaïque (9) ou sont donnés par au moins une cellule photovoltaïque (9).

16. Dispositif selon l'une des revendications 10 à 15, **caractérisé en ce qu'il** est prévu un dispositif de séparation (17) en amont de la demi-cellule cathodique (6) de la cellule principale (2), de sorte que l'eau peut être séparée avant d'atteindre la demi-cellule cathodique (6) de la cellule principale (2).

17. Dispositif (1) selon l'une des revendications 10 à 16, **caractérisé en ce qu'il** est prévu un dispositif d'évaporation (13) placé en amont de la demi-cellule anodique (4) de la cellule principale (2), de préférence, le dispositif d'évaporation (13) étant relié de manière fluidique côté entrée à la demi-cellule anodique (4) de la pré-cellule (3), et/ou le dispositif d'évaporation (13) comprenant au moins un collecteur thermique solaire (14).

18. Dispositif (1) selon l'une des revendications 10 à 17, **caractérisé en ce qu'il** est prévu au moins une conduite de circulation (12) au moyen de laquelle l'azote sortant de la demi-cellule cathodique (6) de la cellule principale (2) peut être réintroduite côté entrée de la demi-cellule cathodique (6).
